# EUROPÄISCHE PATENTSCHRIFT

(11) **EP 3 350 270 B1**
(45) Veröffentlichungstag und Bekanntmachung des Hinweises auf die Patenterteilung: **04.10.2023**
(21) Anmeldenummer: 16753925.3
(22) Anmeldetag: 19.08.2016
(51) Int. Cl.: C09J 7/22, C09J 7/38, C09J 163/00, C08L 33/20, C08L 75/04

(54) **FLEXIBLES HAFTKLEBEBAND ZUR STRUKTURELLEN VERKLEBUNG**
FLEXIBLE ADHESIVE TAPE FOR STRUCTURAL ADHESION
BANDE ADHÉSIVE FLEXIBLE POUR COLLAGE STRUCTUREL

(30) Priorität: 17.09.2015 DE 102015217833
(43) Veröffentlichungstag der Anmeldung: 25.07.2018
(73) Patentinhaber: tesa SE, 22848 Norderstedt (DE)
(72) Erfinder: SCHUH, Christian, 22767 Hamburg (DE); QUERDEL, Yvonne, 22926 Ahrensburg (DE); KIRPICENOK, Olga, 25474 Ellerbek (DE)
(74) Vertreter: tesa SE
(86) Internationale Anmeldenummer: PCT/EP2016/069714
(87) Internationale Veröffentlichungsnummer: WO 2017/045865

(56) Entgegenhaltungen:
- EP-A2- 1 900 787
- DE-A1-102010 002 501
- US-A- 4 091 157

## Beschreibung

### Technisches Gebiet der Erfindung

Die vorliegende Erfindung betrifft ein flexibles haftklebriges flächiges Gebilde, insbesondere ein Haftklebeband, zur strukturellen Verklebung, insbesondere zum Spaltmaßausgleich diverser Materialien, wie z.B. Metall, Holz, Glas und/oder Kunststoff, insbesondere von Karosserieteilen in der Automobilindustrie.

### Allgemeiner Stand der Technik

Strukturelles Verkleben von Bauteilen, wie z.B. im Automobilbau, mit Hilfe von thermisch härtenden Flüssigklebern auf Epoxid- oder Urethanbasis ist seit Jahren bekannt. Diese werden über komplex gesteuerte Dosiermaschinen aufgetragen und verfügen in der Regel über keine initiale Haftklebrigkeit, den sog. Tack, so dass die Bauteile über den Aushärtungszeitraum in Position gehalten werden müssen, um nicht zu verrutschen. Es wurden einige wenige haftklebrige Systeme auf Basis von Acrylaten, die an sich haftklebrig sind, mit Epoxiden beschrieben. Die Acrylate enthalten meist Epoxidfunktionalitäten, sodass im Aushärtungsschritt die Acrylate ebenfalls über die Epoxidvernetzer gehärtet werden. Diese Systeme verlieren jedoch ihre Haftklebrigkeit, wenn der Epoxidanteil im Flüssigkleber 50 Gew.-% übersteigt. Gerade hohe Epoxidanteile im Flüssigkleber ermöglichen es aber, die zu verklebenden Bauteile mit hohen Verklebungsfestigkeiten, d.h. hohen Scherfestigkeiten, zu verkleben.

Nachteil derartiger Flüssigkleber ist zudem, dass sie im thermischen Aushärtungsschritt eine sehr niedrigviskose Phase durchlaufen, wodurch sie sich in der Klebefuge und darüber hinaus ausbreiten können bzw. "ausbluten", wodurch die zu verklebenden Bauteile mit dem Flüssigkleber kontaminiert werden. Teilweise fließen sogar so große Anteile an Flüssigkleber aus der Klebefuge heraus, dass keine gute Verklebung der Bauteile mehr gewährleistet werden kann. Dieses Problem ist vor allem bei großflächigen Verklebungen und/oder bei solchen Anwendungen problematisch, bei denen die Oberflächen der zu verklebenden Bauteile uneben, z.B. geneigt oder in komplexer dreidimensionaler Form, mit Spaltunterschieden bis zu einigen mm vorliegen. Zudem erfolgt die Aktivierung des Flüssigklebers in der Regel bei erhöhten Temperaturen, was für empfindliche Bauteile problematisch sein kann. Ein weiterer Nachteil ist, dass durch den niedrigen Epoxidgehalt der Flüssigkleber zwar die Haftklebrigkeit zur besseren Positionierung der zu verklebenden Bauteile erhöht werden kann, aber dadurch auch die Verklebungsfestigkeiten der verklebten Bauteile eingeschränkt werden, da die Scherfestigkeiten mit den Epoxidanteilen der Flüssigkleber steigen.

Eine Möglichkeit, das "Ausbluten" aufgrund der Verflüssigung zu vermeiden, ist die Vorvernetzung des typischerweise vorliegenden Polymeranteils im Flüssigkleber, z.B. mit Isocyanaten. Hierbei reagieren funktionelle Gruppen der Matrixpolymere, wie beispielsweise -OH, -NH, -COOH, mit Isocyanatvernetzern - bevorzugt werden multifunktionelle Isocyanate, wie Desmodur N 3300, eingesetzt. Werden Matrixpolymere, wie beispielsweise Polyurethane, verwendet, so können die endständigen Hydroxylgruppen zur Vernetzung genutzt werden. Hier hat es sich als vorteilhaft herausgestellt, der Klebemasse OH-funktionelle Bausteine mit niedrigem Molekulargewicht (z.B. Capa 2203, niedermolekulares Polycaprolacton, Mₙ ~ 2000 g/mol) zuzugeben, um die Vernetzung zu beschleunigen. Solche Systeme zeigen zwar ein reduziertes Ausbluten, eignen sich jedoch schlecht zur Überbrückung von Spalten.

DE 10 2011 008 191 A1 beschreibt ein hitzeaktivierbares strukturelles Haftklebeband mit einem Gewebeträger, mit dessen Hilfe mehrere Klebeschichten zusammenkaschiert werden, wodurch eine Dicke erreicht wird, die Toleranzen in der Anwendung ausgleichen und sich besser an gewölbte oder gekrümmte Oberflächen anpassen kann. Weiterhin gestattet das Gewebe dem Klebstoff, wenn er während der Erwärmung flüssig ist, hindurchzufließen und sich mit dem Klebstoff auf der anderen Seite des Gewebes zu verbinden. Das Aufsaugen von flüssigen Bestandteilen des Klebstoffs durch das Gewebe kann dazu führen, dass der Klebstoff das Gewebe nicht gleichmäßig durchdringt. Das Aufsaugen sorgt jedoch dafür, dass ein noch nicht vollständig gehärteter Verbund nicht verrutscht. Wesentliche Komponente des beschriebenen Klebstoffs ist vorzugsweise ein epoxyfunktionelles Acrylatpolymer. Nachteilig an dem Haftklebesystem ist, dass der Gewebeträger sich in den meisten Fällen nicht gut zum Überbrücken von Spalten eignet und auch nur begrenzt hitzebeständig ist, so dass er nicht zusammen mit Klebmassen verwendet werden kann, die zum Aushärten hohe Temperaturen benötigen. Dementsprechend lässt sich das beschriebene Haftklebesystem zum Beispiel für die Anbringung eines Spiegelfußhalters auf der Scheibe eines Automobils einsetzen, nicht aber für andere typische Klebeanwendungen, die im Fertigungsprozess eines Automobils vorangehen und üblicherweise Temperaturen von 180°C über 30 min erfordern.

In der US4091157 A werden Verbundmaterialien mit einer Klebemassenschicht umfassend eine thermisch aushärtbare Reaktivkomponente und eine Initiator enthaltende Schicht offenbart. Ein polymerer Schaumträger wird als Alternative zu einem faserförmigen Trägermaterial für den Initiator erwähnt.

EP1900787 beschreibt ein Schaumklebeband umfassend einen Schaumträger und eine härtbare Klebstoffschicht enthaltend ein Reaktivharz.

Es besteht folglich ein Bedarf nach einem Haftklebesystem zur strukturellen Verklebung, das die oben beschriebenen Probleme löst und das insbesondere neben einer initialen Haftklebrigkeit auch eine zufriedenstellende Verklebungsfestigkeit der damit verklebten Bauteile ermöglicht.

### Aufgabe der vorliegenden Erfindung

Der vorliegenden Erfindung liegt insofern die Aufgabe zu Grunde, ein verbessertes, flexibles haftklebriges flächiges Gebilde zur strukturellen Verklebung, insbesondere zum Ausgleich von Spaltunterschieden der zu verklebenden Bauteile, bereitzustellen. Vor diesem Hintergrund schlägt die vorliegende Erfindung ein flexibles haftklebriges flächiges Gebilde, wie in den Ansprüchen definiert, vor, um die oben beschriebenen Probleme der bekannten Flüssigkleber zu umgehen.

Insbesondere wird ein flexibles haftklebriges flächiges Gebilde bereitgestellt, das einfach zu handhaben ist und bereits eine Haftklebrigkeit aufweist, so dass es zu keinem Verrutschen bei der Applikation auf die zu verklebenden Bauteile kommt und eine exaktere Verklebung als bei den im Stand der Technik bekannten Flüssigklebern ermöglicht wird. Außerdem ist das flexible haftklebrige flächige Gebilde der vorliegenden Erfindung dadurch gekennzeichnet, dass es im thermischen Aushärtungsschritt dimensionsstabil bleibt und folglich nicht aus der Klebefuge herausfließt oder "ausblutet", so dass die Verklebung der zu verklebenden Bauteile jederzeit gewährleistet ist und gleichzeitig hohe Verklebungsfestigkeiten erzielt werden können. Zudem können mit dem erfindungsgemäßen flexiblen haftklebrigen flächigen Gebilde Spaltunterschiede bis zu einigen mm zwischen den zu verklebenden Bauteilen ausgeglichen werden, sog. "gap filling".

### Zusammenfassung der Erfindung

Die vorliegende Erfindung betrifft ein flexibles haftklebriges flächiges Gebilde umfassend (a) ein offenzelliges flexibles Schaumsubstrat mit (b) mindestens einer Schicht einer thermisch härtbaren Haftklebemasse auf beiden Seiten des offenzelligen flexiblen Schaumsubstrats, wobei das offenzellige Schaumsubstrat (a) ein chemisch vernetzter Schaum ist, wobei die thermisch härtbare Haftklebemasse mindestens (i) ein Polymer, mindestens (ii) eine Reaktivkomponente, mindestens (iii) einen Aktivator und gegebenenfalls (iv) ein Klebharz umfasst, wobei die thermisch härtbare Haftklebemasse auf 100 Teile Polymer (i) und gegebenenfalls Klebharz (iv) mindestens 100 Teile Reaktivkomponente (ii) enthält. Das flexible haftklebrige flächige Gebilde der vorliegenden Erfindung ist zur strukturellen Verklebung, insbesondere zum Ausgleich von Spaltunterschieden der zu verklebenden Bauteile, bestimmt.

Außerdem wird ein Verfahren zur Herstellung eines flexiblen haftklebrigen flächigen Gebildes wie oben beschrieben, und dessen Verwendung beansprucht. Es wird ein Kit, umfassend mindestens ein flexibles haftklebriges flächiges Gebilde wie oben beschrieben, zur Verfügung gestellt. Weiter werden ein flexibles haftklebriges flächiges Gebilde, erhältlich durch die genannten Verfahren, und ein Verbundkörper, der durch ein flexibles haftklebriges flächiges Gebilde der vorliegenden Erfindung verbunden ist, bereitgestellt.

Das flexible haftklebrige flächige Gebilde der vorliegenden Erfindung ist zur verbesserten strukturellen Verklebung, insbesondere zum Spaltmaßausgleich oder "gap filling", diverser Materialien geeignet.

### Detaillierte Beschreibung der Erfindung

Erfindungsgemäß wird die oben beschriebene Aufgabe durch ein flexibles haftklebriges flächiges Gebilde gelöst, das (a) einen offenzelligen, flexiblen und chemisch vernetzten Schaum als Träger und (b) mindestens eine thermisch härtbare Haftklebemasse, laminiert auf jede Seite des offenzelligen, flexiblen und chemische vernetzten Schaums, umfasst.

Nachfolgend wird die vorliegende Erfindung im Detail beschrieben.

### Offenzelliges Schaumsubstrat (a)

Das flexible haftklebrige flächige Gebilde der vorliegenden Erfindung enthält ein offenzelliges, chemisch vernetztes Schaumsubstrat (a), das flexibel und gegebenenfalls kompressibel ist. Aufgabe dieses Schaumsubstrats ist, ein inertes Grundgerüst für die thermisch härtbare Haftklebemasse zu bilden, so dass diese nicht die im Stand der Technik genannten Probleme auslöst, sondern vor oder während der thermischen Härtung in verflüssigter und/oder niedrigviskoser Form von dem offenzelligen Schaumsubstrat als Träger aufgenommen wird und anschließend in diesem verfestigt, d.h. eingelagert, wird.

Auf diese Art wird eine einfachere Handhabung während der Verklebung gewährleistet und ein Herausfließen (oder "Ausbluten") der thermisch härtbaren Haftklebemasse verhindert, so dass die zu erreichende Verklebung schnell und dauerhaft gewährleistet wird. Nach der Härtung der thermisch härtbaren Haftklebemasse ist das offenzellige Schaumsubstrat nicht mehr flexibel und nicht mehr kompressibel, sondern durch die ausgehärtete Haftklebemasse in der gewünschten Form fixiert.

Inert bedeutet in diesem Zusammenhang, dass die Reaktivkomponente (ii) der thermisch härtbaren Haftklebemasse, d.h. reaktiven Monomere und/oder Reaktivharze, wie (Meth)Acrylate oder Epoxidharze, unter geeignet gewählten Bedingungen, z.B. bei ausreichend geringen Temperaturen, nach dem Aushärten im Wesentlichen nicht mit dem offenzelligen Schaumsubstrat reagiert.

Als offenzelliges Schaumsubstrat verwendbar im Sinne der vorliegenden Erfindung sind alle anspruchsgemäßen offenzelligen Schäume. Ein "offenzelliges Schaumsubstrat" (oder auch "offenzelliger Schaum" bzw. " offenzelliger Schaumstoff") ist ein Substrat mit zelliger Struktur und niedriger Dichte, das vorzugsweise durch Druck sein Volumen deutlich verkleinern kann, d.h. kompressibel ist, dabei aber noch elastisches oder viskoelastisches Verhalten mit einer Mindestrückstellkraft aufweist. "Offenzellig" bedeutet in diesem Zusammenhang, dass die Zellwände des Schaumstoffs nicht geschlossen sind, d.h. dass Flüssigkeiten aufgenommen werden können. Im Extremfall besteht das offenzellige Schaumsubstrat erfindungsgemäß nur aus Zellstegen. Im Gegensatz dazu sind geschlossenzellige Schaumsubstrate zu nennen, in denen die Wände zwischen den einzelnen Zellen komplett geschlossen sind, d.h. grundsätzlich keine Flüssigkeiten aufgenommen werden können. Gemischtzellige Schaumstoffe enthalten beide Arten von Zellen. Das "offenzellige Schaumsubstrat" im Sinne der Erfindung muss grundsätzlich in der Lage sein, Flüssigkeiten (bzw. die während der Härtung verflüssigte Haftklebemasse) aufzunehmen, d.h. auch gemischtzellige Schaumsubstrate sind grundsätzlich geeignet.

Das offenzellige Schaumsubstrat kann in jeder beliebigen Form vorliegen. Bevorzugt liegt das offenzellige Schaumsubstrat bereits in Form einer Folie, eines Bands oder eines Streifens beliebiger Breite oder auch eines Pads beliebiger Kontur vor, die gegebenenfalls auf eine Rolle aufgewickelt werden können. Alternativ kann das offenzellige Schaumsubstrat während des Verfahrens (Schritt E) auf eine Rolle aufgewickelt werden und in ein Band beliebiger Breite, in Streifen beliebiger Breite oder Pads beliebiger Kontur geschnitten werden.

Grundsätzlich muss die thermisch härtbare Haftklebemasse das Schaumsubstrat benetzen können. Vorzugsweise ist die Temperaturstabilität des Schaumsubstrats höher als die Vernetzungstemperatur der Haftklebemasse. Bevorzugt werden polare Schaumsubstrate mit hoher Oberflächenenergie eingesetzt, so dass die Oberflächenenergie des Schaumsubstrats höher als die Oberflächenenergie der Haftklebemasse ist.

Erfindungsgemäße offenzellige Schaumsubstrate zur Verwendung in der vorliegenden Erfindung sind Elastomere, d.h. chemisch vernetzte Kunststoffe, und vorzugsweise ausgewählt aus der folgenden Liste: Polyurethan und/oder Derivate hiervon, insbesondere elastomere Polyurethanester und -ether, Melamin und/oder Derivate hiervon, Nitrilkautschuk, Polystyrol und/oder Phenoplaste.

Ein "Elastomer" besteht grundsätzlich aus Hauptvalenzketten (Polymerkette je nach chemischem Aufbau), die nur weitmaschig vernetzt sind. Bei verhältnismäßig geringen äußeren Kräften können die Hauptvalenzketten unter Streckung der Vernetzungsbindungen gegeneinander abgleiten. Sie bleiben jedoch miteinander verbunden und besitzen eine Rückstellkraft. Im Gegensatz dazu sind "Thermoplaste" zu nennen, die aus nicht verzweigten, d.h. linearen, Hauptvalenzketten (Polymerketten je nach chemischem Aufbau) aufgebaut sind und nur durch schwache physikalische Bindungen (d.h. ohne chemische Vernetzung) miteinander verbunden sind. In einer bevorzugten, erfindungsgemäßen Ausführungsform wird ein Polyurethanweichschaum, insbesondere ein elastomerer Polyurethanester oder -ether, eingesetzt.

In einer besonders bevorzugten, erfindungsgemäßen Ausführungsform werden Schaumsubstrate der Inducon^{®}-Reihe eingesetzt, die im Handel bei der Mayser GmbH & Co. KG Polymer Electric, Örlinger Str. 1-3, 89073 Ulm, Deutschland, erhältlich sind. Schaumsubstrate der Inducon^{®}-Reihe sind zellige Polyurethan-Elastomere, die auf thermisch verdichtetem Ester- oder Ether-Weichschaum basieren.

Die Dicke des offenzelligen Schaumsubstrats liegt erfindungsgemäß im Bereich von etwa 0,1 mm bis 5 mm, bevorzugt etwa 0,2 bis 0,8 mm.

Die Porenanzahl des Schaumsubstrats liegt erfindungsgemäß im Bereich von etwa 10 bis 110 PPI (PPI = Poren pro Inch, 1 Inch entspricht 2,54 cm), bevorzugt etwa 60 bis 80 PPI. Die Poren sind bevorzugt regelmäßig bzw. definiert.

Das Raumgewicht (oder die Dichte) des offenzelligen Schaumsubstrats liegt erfindungsgemäß im Bereich von etwa 5 kg/m³ bis 1000 kg/m³, bevorzugt 40 kg/m³ bis 800 kg/m³, insbesondere 100 kg/m³ bis 600 kg/m³. Für besonders ausgewogene haftklebrige flächige Gebilde in Bezug auf das elastische Verhalten vor Aushärtung und Verklebungsfestigkeit nach der Aushärtung eignen sich Schäume mit Dichten von 350 kg/m³ - 600 kg/m³, bevorzugt 375 - 500 kg/m³.

### Thermisch härtbare Haftklebemasse (b)

Das erfindungsgemäße haftklebrige flächige Gebilde enthält mindestens einen thermisch härtbaren Haftklebefilm auf jeder Seite des offenzelligen Schaumsubstrats. Die einzelnen Komponenten der thermisch härtbaren Haftklebemasse (b) werden nachfolgend aufgeführt:

### Polymer (i)

Das Polymer (i) kann ein Polymer oder eine Mischung mehrerer verschiedener Polymere sein. Bevorzugt ist das mindestens eine Polymer ein Elastomer oder ein Thermoplast.

Beispiele für Polymere sind Elastomere, wie sie im Bereich der Haftklebemassen üblicherweise verwendet werden oder auch wie sie in dem "Handbook of Pressure Sensitive Adhesive Technology" von Donatas Satas (Satas & Associates, Warwick 1999), beschrieben sind. Dies sind zum Beispiel Elastomere auf der Basis von Acrylaten und/oder Methacrylaten, Polyurethanen, Naturkautschuken, Synthesekautschuken wie Butyl-, (Iso)Butyl-, Nitril- oder Butadienkautschuke, Styrolblockcopolymeren mit einem Elastomerblock aus ungesättigten oder teilweise oder vollständig hydrierten Polydienblöcken (Polybutadien, Polyisopren, Poly(iso)butylen, Copolymeren aus diesen sowie weitere, dem Fachmann geläufige Elastomerblöcke), Polyolefinen, Fluorpolymeren und/oder Silikonen.

Kommen Kautschuk oder Synthesekautschuk oder daraus erzeugte Verschnitte als Basismaterial für die Klebemasse zum Einsatz, dann kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) oder der Polyurethane und/oder deren Verschnitten gewählt werden.

Als das mindestens eine Polymer kann auch jegliche, dem Fachmann bekannte Art von Thermoplasten zum Einsatz kommen, wie sie zum Beispiel in den Lehrbüchern "Chemie und Physik der synthetischen Polymere" von J.M.G. Cowie (Vieweg, Braunschweig) und "Makromolekulare Chemie" von B. Tieke (VCH Weinheim, 1997) genannt sind, wie z.B. Poly(ethylen), Poly(propylen), Poly(vinylchlorid), Poly(styrol), Poly(oxymethylene), Poly(ethylenoxid), Poly(ethylenterephthalat), Poly(carbonate), Poly(phenylenoxide), Poly(urethane), Poly(harnstoffe), Acrylnitril-Butadien-Styrol (ABS), Poly(amide) (PA), Poly(lactat) (PLA), Poly(etheretherketon) (PEEK), Poly(sulfon) (PSU), Poly(ethersulfon) (PES).

Vorteilhafte Polymere für sehr hohe Verklebungsfestigkeiten sind Poly(amide), Polyurethane, Acrylnitril-Butadien-Kautschuke und Poly(harnstoffe), Poly(etheretherketon) (PEEK), Poly(sulfon) (PSU), Poly(ethersulfon) (PES).

In einer besonders bevorzugten Ausführungsform der Erfindung werden Polyurethane und/oder Acrylnitril-Butadien-Kautschuke eingesetzt.

Das Polymer kann von linearer, verzweigter, sternförmiger oder gepfropfter Struktur sein, um nur einige Beispiele zu geben, und als Homopolymer, als statistisches Copolymer, als alternierendes oder als Blockcopolymer aufgebaut sein. Die Bezeichnung "statistisches Copolymer" beinhaltet im Sinne dieser Erfindung nicht nur solche Copolymere, in denen die bei der Polymerisation eingesetzten Comonomere rein statistisch eingebaut sind, sondern auch solche, bei denen Gradienten in der Comonomerzusammensetzung und/oder lokale Anreicherungen einzelner Comonomersorten in den Polymerketten vorkommen. Einzelne Polymerblöcke können als Copolymerblock (statistisch oder alternierend) aufgebaut sein.

### Reaktivkomponente (ii)

Als Reaktivkomponente können im Prinzip alle, dem Fachmann im Bereich der Haftklebemassen oder Reaktivklebstoffe bekannten, in einer Aufbaureaktion vernetzende Makromoleküle bildenden reaktiven Konstituenten verwendet werden, wie sie zum Beispiel in Gerd Habenicht: Kleben -Grundlagen, Technologien, Anwendungen, 6. Auflage, Springer, 2009, beschrieben sind. Dies sind beispielhaft Konstituenten, die Epoxide, Polyester, Polyether, Polyurethane, Phenolharz-, Kresol oder Novolak basierte Polymere, Polysulfide oder Acrylpolymere (Acryl, Methacryl) bilden.

Der Aufbau und die chemische Beschaffenheit der Reaktivkomponente sind nicht kritisch, solange sie aus Vorläufern hergestellt werden kann, die mit der Polymerphase zumindest teilweise mischbar sind, und die Aufbaureaktion unter Bedingungen, insbesondere hinsichtlich der angewendeten Temperaturen, Art der verwendeten Katalysatoren und dergleichen, durchgeführt werden kann, die zu keiner wesentlichen Beeinträchtigung und/oder Zersetzung der Polymerphase führen.

Erfindungsgemäß ist eine geeignete Reaktivkomponente ausgewählt aus Vinylverbindungen; Acrylsäure, Acrylsäureestern, Methacrylsäure und/oder Methacrylsäureestern, wie z.B. Methylmethacrylat; und/oder Reaktivharzen, umfassend Acryl- und Methacrylsäureester mit Alkylgruppen, bestehend aus 4 bis 18 C-Atomen. Spezifische Beispiele für entsprechende Verbindungen sind, ohne sich durch diese Aufzählung einschränken zu wollen, n-Butylacrylat, n-Butylmethacrylat, n-Pentylacrylat, n-Pentylmethacrylat, n-Hexylacrylat, n-Hexylmethacrylat, n-Heptylacrylat, n-Heptylmethacrylat, n-Octylacrylat, n-Octylmethacrylat, n-Nonylacrylat, n-Nonylmethacrylat, Laurylacrylat, Laurylmethacrylat, Hexadecylacrylat, Hexadecylmethacrylat, Stearylacrylat, Stearylmethacrylat, Behenylacrylat, Behenylmethacrylat, deren verzweigte Isomere, wie zum Beispiel 2-Ethylhexylacrylat, 2-Ethylhexylmethacrylat, iso-Octylacrylat, iso-Octylmethacrylat, iso-Decylacrylat, iso-Decylmethacrylat, Tridecylacrylat, Tridecylmethacrylat sowie cyclische Monomere, wie zum Beispiel Cyclohexylacrylat, Cyclohexylmethacrylat, Tetrahydrofurfurylacrylat, Tetrahydrofurfurylmethacrylat, Dihydrodicyclopentadienylacrylat, Dihydrodicyclopendadienylmethacrylat, 4-tert-Butylcyclohexylacrylat, 4-tert-Butylcyclohexylmethacrylat, Norbornylacrylat, Norbornylmethacrylat, Isobornylacrylat und Isobornylmethacrylat.

Weiterhin einsetzbar sind Acryloylmorpholin, Methacryloylmorpholin, Trimethylolpropanformalmonoacrylat, Trimethylolpropanformalmonomethacrylat, propoxyliertes Neopentylmethylethermonoacrylat, propoxyliertes Neopentylmethylethermonomethacrylat, Tripropylenglykolmethylethermonoacrylat, Tripropylenglykolmethylethermonomethacrylat, ethoxyliertes Ethylacrylat wie Ethyldiglykolacrylat, ethoxyliertes Ethylmethacrylat wie Ethyldiglykolmethacrylat, propoxyliertes Propylacrylat und propoxyliertes Propylmethacrylat.

Ebenfalls einsetzbar als Reaktivharze sind Acryl- und Methacrylsäureester, die aromatische Reste enthalten, wie zum Beispiel Phenylacrylat, Benzylacrylat, Phenylmethacrylat, Benzylmethacrylat, Phenoxyethylacrylat, Phenoxyethylmethacrylat, ethoxyliertes Phenolacrylat, ethoxyliertes Phenolmethacrylat, ethoxyliertes Nonylphenolacrylat oder ethoxyliertes Nonylphenolmethacrylat. Weiterhin können aliphatische oder aromatische, insbesondere ethoxylierte oder propoxylierte Polyethermono(meth)acrylate, aliphatische oder aromatische Polyestermono(meth)acrylate, aliphatische oder aromatische Urethanmono(meth)acrylate oder aliphatische oder aromatische Epoxymono(meth)acrylate als Verbindungen, die eine (Meth)acrylat-Funktion tragen, eingesetzt werden.

Bevorzugt werden als Verbindungen, die zumindest zwei (Meth)acrylat-Funktionen tragen, eine oder mehrere Verbindungen aus der Liste umfassend difunktionelle aliphatische (Meth)acrylate wie 1,3-Propandioldi(meth)acrylat, 1,4-Butandioldi(meth)acrylat, 1,6-Hexandioldi(meth)acrylat, 1,5-Neopentyldi(meth)acrylat, Dipropylenglykoldi(meth)acrylat, Tricyclodecandimethyloldi(meth)acrylat, Cyclohexandimethanoldi(meth)acrylat, trifunktionelle aliphatische (Meth)acrylate wie Trimethylolpropantri(meth)acrylat, tetrafunktionelle aliphatische (Meth)acrylate wie Ditrimethylolpropantetra(meth)acrylat oder Ditrimethylolpropantetra(meth)acrylat, pentafunktionelle aliphatische (Meth)acrylate wie Dipentaerythritolmono-hydroxypenta(meth)acrylat, hexafunktionelle aliphatische (Meth)acrylate wie Dipentaerythritolhexa(meth)acrylat eingesetzt. Ferner, wenn höherfunktionalisierte Verbindungen eingesetzt werden, können aliphatische oder aromatische insbesondere ethoxylierte und propoxylierte Polyether(meth)acrylate mit insbesondere zwei, drei, vier oder sechs (Meth)acrylat-Funktionen wie ethoxyliertes Bisphenol A Di(meth)acrylat, Polyethylenglykoldi(meth)acrylat, propoxyliertes Trimethylolpropantri(meth)acrylat, propoxyliertes Glyceroltri(meth)acrylat, propoxyliertes Neopentylglyceroldi(meth)acrylat, ethoxyliertes Trimethyloltri(meth)acrylat, ethoxyliertes Trimethylolpropandi(meth)acrylat, ethoxyliertes Trimethylolpropantri(meth)acrylat, Tetraethylenglykoldi(meth)acrylat, ethoxyliertes Neopentylglykoldi(meth)acrylat, propoxyliertes Pentaerythritoltri(meth)acrylat, Dipropylenglykoldi(meth)acrylat, ethoxyliertes Trimethylolpropanmethyletherdi(meth)acrylat, aliphatische oder aromatische Polyester(meth)acrylate mit insbesondere zwei, drei, vier oder sechs (Meth)acrylat-Funktionen, aliphatische oder aromatische Urethan(meth)acrylate mit insbesondere zwei, drei, vier oder sechs (Meth)acrylat-Funktionen, aliphatische oder aromatische Epoxy(meth)acrylate mit insbesondere zwei, drei, vier oder sechs (Meth)acrylat-Funktionen genutzt werden.

Besonders bevorzugt sind erfindungsgemäß Epoxidharze und/oder eine Mischung verschiedener Epoxidharze als Reaktivkomponente (ii) der Haftklebemasse vorgesehen.

Erfindungsgemäß ist ein geeignetes Reaktivharz ein Epoxidharz und/oder eine Mischung verschiedener Epoxidharze, wie z.B. monomere oder polymere, aliphatische, cycloaliphatische oder aromatische Epoxide. Diese Materialien weisen im Allgemeinen im Durchschnitt wenigstens zwei Epoxidgruppen pro Molekül, vorzugsweise mehr als zwei Epoxidgruppen pro Molekül, auf. Die "durchschnittliche" Anzahl an Epoxidgruppen pro Molekül wird als die Anzahl an Epoxidgruppen in dem epoxidhaltigen Material, dividiert durch die Gesamtanzahl an vorliegenden Epoxidmolekülen, definiert. Die polymeren Epoxide umfassen lineare Polymere mit endständigen Epoxidgruppen (z.B. ein Diglycidylether eines Polyoxyalkylenglycols), Polymere mit Gerüstoxiraneinheiten (z.B. Polybutadien-Polyepoxid) und Polymere mit Epoxidseitengruppen (z.B. ein Glycidylmethacrylatpolymer oder -copolymer). Das Molekulargewicht des epoxidhaltigen Materials kann von 58 bis etwa 100.000 g/mol oder mehr variieren. Mischungen aus verschiedenen epoxidhaltigen Materialien können auch in Hotmelt-Zusammensetzungen der Erfindung verwendet werden.

Nützliche epoxidhaltige Materialien umfassen jene, die Cyclohexenoxidgruppen enthalten, insbesondere Epoxycyclohexancarboxylate, wie z.B. 3,4-Epoxycyclohexylmethyl-3,4-epoxycyclohexancarboxylat, 3,4-Epoxy-2-methylcyclohexylmethyl-3,4-epoxy-2-methylcyclohexancarboxylat und Bis(3,4-epoxy-6-methylcyclohexylme-thyl)adipat.

Weitere epoxidhaltige Materialien, die erfindungsgemäß nützlich sind, sind Glycidylether mehrwertiger Phenole, die durch Reaktion eines mehrwertigen Phenols mit einem Überschuss an Chlorhydrin, wie Epichlorhydrin (z.B. der Diglycidylether von 2,2-Bis-(2,3-epoxypropoxyphenol)propan), erhalten werden. Weitere Beispiele von Epoxiden dieses Typs, die bei der Anwendung dieser Erfindung verwendet werden können, sind in U.S. Patent Nr. 3,018,262 beschrieben.

Es gibt eine Vielzahl an im Handel erhältlichen epoxidhaltigen Materialien, die in dieser Erfindung verwendet werden können. Insbesondere sind hier zu nennen: Octadecylenoxid, Epichlorhydrin, Styroloxid, Vinylcyclohexenoxid, Glycidol, Glycidylmethacrylat, Diglycidylether von Bisphenol A (z.B. jene, die unter den Handelsbezeichnungen EPON 828, EPON 1004 und EPON 1001F von Shell Chemical Co. und DER-332 und DER-334 von Dow Chemical Co. erhältlich sind), Diglycidylether von Bisphenol F (z.B. ARALDITE GY281 von Ciba-Geigy), Vinylcyclohexendioxid (z.B. ERL 4206 von Union Carbide Corp.), 3,4-Epoxycyclohexylmethyl-3,4-epoxycyclohexencarboxylat (z.B. ERL-4221 von Union Carbide Corp.), 2-(3,4-Epo-xycyclohexyl-5,5-spiro-3,4-epoxy)cyclohexan-metadioxan (z.B. ERL-4234 von Union Carbide Corp.), Bis(3,4-epoxycyclohexyl)adipat (z.B. ERL-4299 von Union Carbide Corp.), Dipentendioxid (z.B. ERL-4269 von Union Carbide Corp.), epoxidiertes Polybutadien (z.B. OXIRON 2001 von FMC Corp.), silikon-harzhaltige Epoxidfunktionalität, Epoxysilane (z.B. beta-(3,4-Epoxycyclohexyl)ethyltrimethoxysilan und gamma-Glycidoxypropyltrimethoxysilan, im Handel erhältlich von Union Carbide), feuerhemmende Epoxidharze (z.B. DER-542, ein bromiertes bisphenolartiges Epoxidharz, erhältlich von Dow Chemical Co.), 1,4-Butandioldiglycidylether (z.B. ARALDITE RD-2 von Ciba-Geigy), hydrierte, auf Bisphenol A-Epichlorhydrin basierende Epoxidharze (z.B. EPONEX 1510 von Shell Chemical Co.) und Polyglycidylether von Phenolformaldehyd-Novolak (z.B. DEN-431 und DEN-438 von Dow Chemical Co.).

Die Menge der Reaktivkomponente beträgt erfindungsgemäß mindestens 100 Teile Reaktivkomponente (ii), bevorzugt mindestens 200 Teile Reaktivkomponente (ii), besonders bevorzugt mindestens 300 Teile Reaktivkomponente (ii), auf 100 Teile Polymer (i) und gegebenenfalls Klebharz (iv).

Damit die Klebmasse im thermischen Aushärtungsschritt ausreichend weich wird und dementsprechend gut in den Schaum fließt, ist das Molekulargewicht der Reaktivkomponente bevorzugt kleiner 100.000 g/mol. Besonders gut sind die haftklebrigen Eigenschaften im unausgehärteten Zustand, wenn das Molekulargewicht der Reaktivkomponente kleiner 10.000 g/mol ist und/oder der Erweichungspunkt unter 110°C, bevorzugt unter 100°C, liegt.

### Aktivator (iii)

Wie hierin verwendet, steht der Begriff "Aktivator" (oder auch "Initiator" oder "Härter") für eine Verbindung, die eine Polymerisationsreaktion oder Vernetzung der Haftklebemasse einleiten oder selbst an dieser als Reaktionspartner der Reaktivkomponente teilnehmen kann.

Der erfindungsgemäßen Haftklebemasse wird mindestens ein Aktivator (iii) zugesetzt.

Es können alle im Stand der Technik bekannten Aktivatoren, je nach gewählter Reaktivkomponente (ii), eingesetzt werden. Für reaktive Monomere auf Acrylatbasis werden radikalische Aktivatoren, wie z.B. Peroxide, Hydroperoxide und Azoverbindungen, verwendet. Für Reaktivharze auf Epoxidbasis werden aminische oder thiolische Aktivatoren oder auch saure Aktivatoren eingesetzt, wie z.B. aliphatische Amine, aromatische Amine, modifizierte Amine, Polyamidharze, Säureanhydride, sekundäre Amine, Mercaptane, insbesondere Polymercaptane, Polysulfide, Dicyandiamid, organische Säurehydrazide.

Besonders bevorzugt werden erfindungsgemäß aminische Aktivatoren (iii), insbesondere Dicyandiamid, für die oben beschriebenen Reaktivkomponenten (ii) auf Epoxidbasis eingesetzt. In diesem Fall ist die Menge des Aktivators abhängig von der Epoxidmenge und den Epoxidäquivalenten des verwendeten Epoxides. Die Berechnung erfolgt analog zu der dem Fachmann bekannten Berechnung über Epoxyäquivalente und Aminäquivalente des Aktivators und ist beispielsweise in "Formulierung von Kleb- und Dichtstoffen" von Bodo Müller und Walter Rath (Kapitel 2.2.2) beschrieben.

### Beschleuniger

Wie hier verwendet, steht der Begriff "Beschleuniger" (oder auch "Akzeleratoren" oder "Booster") für eine Verbindung, die bereits bei sehr geringen Konzentrationen den Ablauf der Polymerisation beschleunigt.

In der vorliegenden Erfindung kann der thermisch härtbaren Haftklebemasse ein Beschleuniger zugesetzt werden. Dieser bewirkt, dass die Starttemperatur für die Vernetzungsreaktion der Reaktivkomponente, insbesondere des Epoxidharzes, verringert wird. Damit wird die Handhabung bei der Verklebung verbessert.

Als Beschleuniger können insbesondere modifizierte und unmodifizierte Imidazole, Harnstoffderivate, Säureanhydride, tertiäre Amine, Polyamine und Kombinationen hiervon verwendet werden, wie z.B. Urone der Dyhard^{®}-Serie, die von der AlzChem AG, CHEMIEPARK TROSTBERG, Postfach 1262, 83303 Trostberg, Deutschland, erhältlich sind. Beispielhaft sind hier Accelerator 960-1, Accelerator 2950, Accelerator 3130, DT 3126-2, XB 5730, oder DY 070 zu nennen, die von der Huntsman International LLC erhältlich sind.

Die Menge des Beschleunigers wird in Relation zum Reaktivharzanteil ermittelt und in phr (parts per hundred resin) angegeben. Erfindungsgemäß liegt die Menge im Bereich von größer 0 bis etwa 6 phr, bevorzugt etwa 0,1-3,0 phr. Am stärksten bevorzugt werden etwa 0,2-1,0 phr, jeweils bezogen auf die Gesamtmenge an Reaktivharzen der thermisch härtbaren Haftklebstoffmasse, eingesetzt.

### Klebharze

Für die vorliegende Erfindung können Klebharze verwendet werden, jedoch ist für die Klebemassen der vorliegenden Erfindung ein Klebharz entbehrlich. Es wird auch ohne Klebharzzusatz die gewünschte Haftklebrigkeit der Klebemasse erreicht.

Sofern Klebharze zum Einsatz kommen, sind hierfür Klebharze, wie sie dem Fachmann zum Beispiel aus dem oben genannten Werk von Satas bekannt sind, geeignet. Dabei kann die Haftklebemasse zumindest eine Sorte eines vorzugsweise zumindest teilhydrierten Klebharzes enthalten, z.B. eines solchen, das mit der Elastomerkomponente und, sofern ein aus Hart- und Weichblöcken aufgebautes Copolymer eingesetzt wird, hauptsächlich mit dem Weichblock verträglich ist (Weichharze).

Ein entsprechendes Klebharz kann eine Erweichungstemperatur, gemessen mittels Ring&Ball-Methode, von größer 25°C sowie ergänzend zumindest eine Sorte Klebharz mit einer Erweichungstemperatur von kleiner 20°C aufweisen. Hierüber kann, falls erforderlich, zum einen das klebtechnische Verhalten, zum anderen aber auch das Auffließverhalten auf dem Verklebungsuntergrund feineingestellt werden.

Für eher unpolare Elastomere können als Harze in der Haftklebemasse partiell oder vollständig hydrierte Harze auf Basis von Kolophonium und Kolophoniumderivaten, hydrierte Polymerisate des Dicyclopentadiens, partiell, selektiv oder vollständig hydrierte Kohlenwasserstoffharze auf Basis von C₅-, C₅/C₉- oder C₉-Monomerströmen, Polyterpenharze auf Basis von α-Pinen und/oder β-Pinen und/oder δ-Limonen und/oder Δ³-Caren, hydrierte Polymerisate von bevorzugt reinen C₈- und C₉-Aromaten eingesetzt werden. Vorgenannte Klebharze können sowohl allein als auch im Gemisch eingesetzt werden.

Dabei können sowohl bei Raumtemperatur feste als auch flüssige Harze zum Einsatz kommen. Um eine hohe Alterungs- und UV-Stabilität zu gewährleisten, sind hydrierte Harze mit einem Hydrierungsgrad von mindestens 90 %, vorzugsweise von mindestens 95 %, bevorzugt.

### Weitere Bestandteile der thermisch härtbaren Haftklebemasse

Die reaktiven Klebstofffilme der vorliegenden Erfindung können gegebenenfalls weitere Additive und/oder Hilfsstoffe enthalten, die im Stand der Technik bekannt sind, wie z.B. Rheologie-Modifikatoren, Flammschutzmittel, Schäumungsmittel, Füllstoffe, Weichmacher, Vernetzer, UV-Stabilisatoren, Antioxidantien oder Adhäsionsvermittler.

Vorteilhaft können der thermisch härtbaren Haftklebemasse induktiv erhitzbare Metalle in fein verteilter Form (iv) zugegeben werden, so dass über Induktion erhitzt werden kann.

### Hotmelt-Haftklebemasse

Die thermisch härtbare Haftklebemasse (b) der vorliegenden Erfindung kann, je nach Wahl des Polymers (i), der Reaktivkomponente (ii) und des Aktivators (iii), eine thermisch härtbare Hotmelt-Haftklebemasse sein, die typischerweise bei Raumtemperatur (23°C) fest vorliegt. Nach Erwärmen auf Temperaturen im Bereich von 40-140°C wird die Hotmelt-Haftklebemasse aufgeschmolzen oder verflüssigt, um so eine flüssige Haftklebemasse zu erhalten. "Aufschmelzen" oder "Verflüssigen" im Sinne der Erfindung soll folglich umfassen, die Hotmelt-Klebemasse in eine fließfähige Form zu bringen.

Eine "Hotmelt-Klebemasse" steht hier für eine Klebemasse, die bei Raumtemperatur (23°C) fest vorliegt (Klebkraft auf Stahl < 1 N/cm) und nach Erwärmen auf Temperaturen im Bereich von 40-140°C erweicht und haftklebrig wird. Die geschmolzene Hotmelt-Klebemasse wird typischerweise im heißen Zustand mit dem Trennliner in Kontakt gebracht oder beschichtet und bildet beim Abkühlen eine feste Verbindung unter Aushärten. Folglich ist eine Hotmelt-Haftklebemasse erfindungsgemäß ein sehr viskoser Haftkleber oder ein sehr fließfähiger Hotmelt-Kleber (Schmelzkleber), die beide ihre Fließeigenschaften unter Erwärmung drastisch verändern.

### Flexibles haftklebriges flächiges Gebilde

In einer bevorzugten, erfindungsgemäßen Ausführungsform umfasst das flexible haftklebrige flächige Gebilde einen offenzelligen Polyurethan-Schaum (a) mit mindestens einer thermisch härtbaren Haftklebemasse (b) auf beiden Seiten, wobei die thermisch härtbare Haftklebemasse (b) die folgenden Bestandteile umfasst: (i) einen Nitril-Butadienkautschuk, (ii) Epoxidharz auf der Basis von Bisphenol-F-diglycidylether, (iii) Dicyandiamid und (iv) ein 1,1-Dialkyl-3-arylharnstoff (Uronbeschleuniger).

In einer alternativen bevorzugten, erfindungsgemäßen Ausführungsform umfasst das flexible haftklebrige flächige Gebilde einen offenzelligen Polyurethan-Schaum (a) mit mindestens einer thermisch härtbaren Haftklebemasse (b) auf beiden Seiten, wobei die thermisch härtbare Haftklebemasse (b) die folgenden Bestandteile umfasst: (i) ein elastisches Polyurethan, (ii) Dicyclopentadien-Epoxy-Novolak-Harz, (iii) Dicyandiamid und (iv) ein 1,1-Dialkyl-3-arylharnstoff (Uronbeschleuniger).

Das flexible haftklebrige flächige Gebilde, das nach dem erfindungsgemäßen Verfahren hergestellt wird, umfasst im einfachsten Fall ein offenzelliges Schaumsubstrat und die thermisch härtbare (Hotmelt-)Haftklebemasse, sowie es sich nach dem hierin beschriebenen Verfahren darstellen lässt.

Ein "haftklebriges flächiges Gebilde" steht hier für ein flächiges Schaumsubstrat als Trägermaterial, das gegebenenfalls beidseitig mit (Hotmelt-)Haftklebmasse und einem Releaseliner abgedeckt ist und auf eine archimedische Rolle aufgewickelt ist. Aus dem haftklebrigen flächigen Gebilde können durch Bedrucken und Stanzen auch selbstklebende Etiketten in Bandform durch im Stand der Technik bekannte Verfahren hergestellt werden.

Das nach dem erfindungsgemäßen Verfahren erhältliche haftklebrige flächige Gebilde ist bevorzugt eine Haftklebefolie, ein Haftklebeband, ein Haftklebestreifen oder ein haftklebendes Pad.

Das haftklebrige flächige Gebilde der Erfindung besitzt in der Regel eine Schichtdicke im Bereich von etwa 0,05 mm - 10 mm, bevorzugt etwa 0,1 mm - 5mm und besonders bevorzugt etwa 0,5 mm - 3 mm. Zur Herstellung größerer Schichtdicken kann es von Vorteil sein, mehrere Haftklebebänder zusammen zu laminieren.

Darüber hinaus ist ein erfindungsgemäßes haftklebriges flächiges Gebilde dann besonders vorteilhaft, wenn die Verklebungsfestigkeit des ausgehärteten haftklebrigen flächigen Gebildes, gemessen mit dem dynamischen Schertest auf Stahl, mindestens 3 MPa, bevorzugt 8 MPa, insbesondere größer 12 MPa, beträgt. Solche Verklebungsfestigkeiten sorgen für eine sehr stabile und dauerhafte Verbindung zwischen den zu verklebenden Materialien und sind beispielsweise auch für Verklebungen mit hohen Ansprüchen an die Verklebungsfestigkeit, wie z.B. in der Automobilindustrie, geeignet.

Weiterhin kann das haftklebrige flächige Gebilde der Erfindung weitere Filme, Schichten, Klebstoffe, (permanente oder temporäre) Träger, Trennpapiere und/oder Trennliner umfassen.

### Substrate

Geeignete Substrate, die zur Verklebung durch das erfindungsgemäße haftklebrige flächige Gebilde geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße haftklebrige flächige Gebilde zur Verklebung von Metallen, Glas und Kunststoffen, insbesondere mit geölten Oberflächen, eingesetzt.

Die Substrate können zudem lackiert, bedruckt, bedampft, besputtert oder anderweitig vorbehandelt sein, wie z.B. über Beflammen, Corona, Plasma oder chemische Verfahren, wie Auftragen eines flüssigen Haftvermittlers/Primers, vorbereitet sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind oder eine komplexe 3D-Struktur haben, mit dem erfindungsgemäßen haftklebrigen flächigen Gebilde verklebt werden. Insbesondere können zwischen den Substraten auftretende Spaltunterschiede mit dem erfindungsgemäßen haftklebrigen flächigen Gebilde ausgeglichen werden (sogenannter "Spaltmaßausgleich").

### Verfahren zur Herstellung eines flexiblen haftklebrigen flächigen Gebildes

Ein erfindungsgemäßes haftklebriges flächiges Gebilde wird durch das nachfolgend beschriebene Verfahren hergestellt:
In einem ersten Schritt (Schritt A.(I)) werden die Inhaltsstoffe, wie in Anspruch 10 definiert, in einem oder mehreren Lösemittel(n) gelöst bzw. fein verteilt und vermischt. Zur Herstellung der Mischung werden übliche Rührgeräte eingesetzt. Alternativ ist kein Lösemittel notwendig, da die Inhaltsstoffe bereits vollständig ineinander löslich sind (ggf. unter Einwirkung von Wärme und/oder Scherung).

Wie hierin verwendet, umfasst der Begriff "Inhaltsstoff" das eingesetzte Polymer (i), die Reaktivkomponente (ii), den Aktivator (iii) sowie weitere optional vorliegende Komponenten, wie oben definiert.

Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Butanon oder Aceton.

In einer alternativen Ausführungsform (Schritt A.(II)) kann eine Hotmelt-Haftklebemasse (oder Schmelz-Haftklebemasse), die die Inhaltstoffe wie oben definiert umfasst, unter Erwärmen auf Temperaturen im Bereich von 40-140°C aufgeschmolzen oder verflüssigt werden, um so eine flüssige bis pastöse Haftklebemasse zu erhalten, die zur nachfolgenden Beschichtung geeignet ist. "Aufschmelzen" im Sinne der Erfindung soll folglich umfassen, die Hotmelt-Klebemasse in eine fließfähige Form zu bringen.

Eine "Hotmelt-Haftklebemasse" steht hier für eine Haftklebemasse, die bei Raumtemperatur (23°C) fest vorliegt und nach Erwärmen auf Temperaturen im Bereich von 40-140°C in eine fließfähige Form überführt wird. Ein Trennliner wird typischerweise mit der über Temperaturerhöhung fließfähig gemachten Hotmelt-Klebemasse im heißen Zustand beschichtet und bildet beim Abkühlen eine feste Verbindung unter Aushärten. Folglich ist eine Hotmelt-Haftklebemasse erfindungsgemäß ein sehr viskoser Haftkleber oder ein sehr fließfähiger Hotmelt-Kleber (Schmelzkleber), die beide ihre Fließeigenschaften unter Erwärmung drastisch verändern.

Daraufhin wird in einem zweiten Schritt (Schritt B) ein Liner (oder Trennpapier/Releaseliner) mit der Mischung der aufgelösten bzw. fein verteilten Inhaltsstoffe nach Schritt A.(I) oder einer unter Erwärmung aufgeschmolzenen Hotmelt-Haftklebemasse nach Schritt A.(II), die die Inhaltsstoffe umfasst, beschichtet. Die Beschichtung erfolgt nach den üblichen Techniken, die im Stand der Technik bekannt sind. Die Schichtdicke des erhaltenen Haftklebefilms auf dem Liner liegt bevorzugt im Bereich von etwa 50 bis 500 µm, stärker bevorzugt im Bereich von etwa 75 bis 300 µm, besonders bevorzugt im Bereich von etwa 100 bis 250 µm. Erfindungsgemäß steigen die Scherfestigkeiten (und damit die Verklebungsfestigkeiten im ausgehärteten, verklebten Zustand) mit der Schichtdicke der auf das Schaumsubstrat auflaminierten Haftklebefilme an.

Ein "Liner" ist ein Trennpapier mit antihaftender Oberfläche, das durch Tränkung oder durch Beschichtung eines geeigneten Trägermaterials, z.B. einer Folie, mit einem Material mit wasserabweisenden (hydrophoben) und/oder ölabweisenden (oleophoben) Eigenschaften, wie z.B. Silikon, Öl, Fett, Polypropylen oder Fluorcarbon, hergestellt werden kann. Der Liner dient zum Schutz der Oberfläche der Klebemasse und ermöglicht einen Transfer der verfestigten Haftklebemasse(n) auf das offenzellige Schaumsubstrat, wie nachfolgend beschrieben.

In einer bevorzugten Ausführungsform der Erfindung wird die Viskosität der Haftklebemasse nach dem Beschichten des Liners, aber vor dem Laminieren des Schaumsubstrats, erhöht. Dies kann durch (I) Abdampfen eines Lösungsmittels, falls vorhanden, bei Raumtemperatur (23°C) über einen Zeitraum von mehreren Minuten bis zu mehreren Stunden, wie z.B. über Nacht, (II) Abkühlen des aus Schritt B erhaltenen Produkts auf Raumtemperatur (23°C), falls eine Hotmelt-Klebemasse nach Schritt A.(II) eingesetzt wurde oder die Haftklebemasse nach Schritt A.(I) erwärmt wurde, oder (III) Vorvernetzung (oder Vorhärtung) des Klebstoffes durch Strahlung oder chemische Reaktion bei erhöhter Temperatur erreicht werden. Die Vorvernetzung kann z.B. durch Elektronenstahl-Behandlung durchgeführt werden.

In einem vierten Schritt (Schritt D) erfolgt die Laminierung eines flexiblen offenzelligen Schaumsubstrats wie oben beschrieben, mit mindestens zwei aus Schritt C erhaltenen Haftklebefilmen, gegebenenfalls immer noch abgedeckt mit dem Trennliner auf der dem Schaum abgewandten Seite, auf jeweils einer Seite des Schaumsubstrats. Auf diese Weise wird das erfindungsgemäße haftklebrige flächige Gebilde hergestellt.

Gegebenenfalls kann das flexible haftklebrige flächige Gebilde der vorliegenden Erfindung in einem weiteren Schritt (Schritt D), gegebenenfalls zusammen mit einem Trennliner, zu einer Rolle aufgewickelt werden.

Zur Lagerung werden die erfindungsgemäßen flexiblen Haftklebebänder bevorzugt mit einem Trennliner oder -papier abgedeckt.

### Kit zur Bereitstellung eines erfindungsgemäßen haftklebrigen flächigen Gebildes

Außerdem wird erfindungsgemäß ein Kit zur Bereitstellung eines flexiblen haftklebrigen flächigen Gebildes bereitgestellt, wobei das Kit mindestens ein flexibles haftklebriges flächiges Gebilde wie oben beschrieben enthält. Ein weitere Bestandteil des Kit könnten beispielsweise ein zu verklebendes Formteil, ein Innenverkleidungselement für ein Automobil oder ein Hilfsmittel sein, mit dem sich das flexible haftklebrige flächige Gebilde auf ein Substrat aufbringen lässt, wobei die Bestandteile des Kits in einer gemeinsamen Verpackung vorliegen können.

Typischerweise wird das flexible haftklebrige flächige Gebilde eines erfindungsgemäßen Kits wie folgt verwendet:
Das flexible haftklebrige flächige Gebilde wird auf eine Oberfläche eines zu verklebenden Substrats aufgebracht.

Dieses wird daraufhin mit einer Oberfläche eines zweiten zu verklebenden Substrats in Kontakt gebracht und über eine Verpresszeit im Bereich von einigen Sekunden bis zu mehreren Minuten bei Raumtemperatur (23°C) in Kontakt gelassen und anschließend im Bereich von einigen Minuten bis zu 1 h bei erhöhten Temperaturen, wie z.B. 100 bis 200°C, bevorzugt etwa 160°C oder 180°C, erhitzt, wodurch die Haftklebemasse verflüssigt und in die Porenstruktur des Schaumsubstrats eindringt oder von dieser aufgenommen wird und weiter eine Vernetzung oder Polymerisationsreaktion der Inhaltsstoffe, insbesondere der Reaktivkomponente, startet und die thermisch härtbare Haftklebemasse aushärtet (thermische Aushärtung).

Das Aufnehmen der flüssigen Klebemasse oder der aufgeschmolzenen Hotmelt-Klebemasse in die Poren des offenzelligen Schaumsubstrats kann auch als ein Aufsaugen oder Tränken während der thermischen Vernetzung betrachtet werden. Erfindungsgemäß werden während der Vernetzung bevorzugt mindestens 50 % der Poren des offenzelligen Schaumsubstrats mit der flüssigen Klebemasse oder der aufgeschmolzenen Hotmelt-Klebemasse, idealerweise vollständig, gefüllt.

"Thermisch härtbar" bedeutet erfindungsgemäß, dass durch Vernetzung der einzelnen Komponenten der Haftklebemasse die Fließfähigkeit der thermisch härtbaren Haftklebemasse innerhalb der Schaumstruktur verringert wird.

Nach der Verklebung und thermischen Härtung/Vernetzung ist das Schaumsubstrat durch die in den Poren des offenzelligen Schaumsubstrats ausgehärtete Haftklebemasse in der durch die zu verklebenden Substrate vorgegebenen Form fixiert, wobei hier eine Überbrückung von Spaltunterschieden erzielt werden kann, so dass auch komplex geformte Substrate, die nicht exakt zueinander passen, d.h. durch eine ungleichmäßige Klebefuge gekennzeichnet sind, miteinander verklebt werden können.

### Verbundkörper

Ferner wird erfindungsgemäß ein Verbundkörper bereitgestellt, der durch das erfindungsgemäße, flexible haftklebrige flächige Gebilde, wie oben definiert, oder durch das erfindungsgemäße Kit, wie oben definiert, verbunden ist. Ein "Verbundkörper" ist hierbei jeder dreidimensionale Gegenstand, der aus mindestens zwei Substraten besteht, die über das erfindungsgemäße haftklebrige flächige Gebilde nach der Aushärtung zusammengehalten werden.

### Experimenteller Teil

Die nachfolgenden Beispiele dienen zur Verdeutlichung der vorliegenden Erfindung, sollen aber keinesfalls als Einschränkung des Schutzbereichs verstanden werden.

### Messmethoden

### Klebkraft

Die Klebkräfte auf Stahl wurden analog ISO 29862 (Methode 3) bei 23°C und 50 % relativer Luftfeuchte bei einer Abzugsgeschwindigkeit von 300 mm/min und einem Abzugswinkel von 180° bestimmt. Als Verstärkungsfolie wurde eine geätzte PET-Folie mit einer Dicke von 36 µm verwendet, wie sie bei der Fa. Coveme (Italien) erhältlich ist. Die Verklebung des haftklebrigen flächigen Gebildes wurde dabei mittels einer Anrollmaschine bei einer Temperatur von 23°C vorgenommen. Die Haftklebebänder wurden sofort nach der Applikation abgezogen. Der Messwert (in N/cm) ergab sich als Mittelwert aus drei Einzelmessungen.

### Verklebungsfestigkeit (Zugscherung)

Als Kenngröße für die Qualität der erzielten Verklebung wurde die Verklebungsfestigkeit eines mit dem erfindungsgemäßen haftklebrigen flächigen Gebildes hergestellten Verbunds für die unterschiedlichen Haftklebebänder ermittelt. Hierzu wurde die Verklebungsfestigkeit in einem dynamischen Zugscherversuch in Anlehnung an DIN-EN 1465 bei 23°C und 50 % relativer Luftfeuchte mit einer Prüfgeschwindigkeit von 10 mm/min jeweils quantitativ bestimmt (Ergebnisse in N/mm² = MPa). Als zu verklebende Materialien wurden Materialien aus Stahl verwendet, welche vor der Verklebung mit Aceton gereinigt wurden. Die Schichtdicken der Haftklebebänder entsprachen jeweils den Summen der beiden Klebefilme und der Schaumdicke (vgl. Tabelle 2). Angegeben ist der Mittelwert aus drei Messungen.

### Ausgangsmaterialien

| | |
|---|---|
| Breon N41H80 | Nitril-Butadien-Kautschuk mit einem Acrylnitrilanteil von 41 % von Zeon Chemicals (London, UK) |
| Desmomelt 530 | Weitgehend lineares Hydroxylpolyurethan. Desmomelt 530 ist ein stark kristallisierendes, elastisches Polyurethan sehr geringer Thermoplastizität der Firma Bayer MaterialScience |
| Epon Resin 828 | Difunktionelles Bisphenol-A / epichlorhydrin Flüssigepoxid mit einem Gewicht pro Epoxid von 185 - 192 g/eq der Firma Momentive. |
| PolyDis PD3611 | Nitrilkautschukmodifiziertes Epoxidharz auf der Basis von Bisphenol-F-diglycidylether mit einem Elastomergehalt von 40 % und einem Gewicht pro Epoxid von 550 g/eq der Firma Schill + Seilacher "Struktol". |
| PolyDis PD3691 | Nitrilkautschukmodifiziertes Epoxidharz auf der Basis von Bisphenol-A-diglycidylether mit einem Elastomergehalt von 5 % und einem Gewicht pro Epoxid von 205 g/eq der Firma Schill + Seilacher "Struktol". |
| Tactix 556 | Dicyclopentadien-Epoxy-Novolak Harz mit einem Gewicht pro Epoxid von 215 - 235 g/eq und einem Erweichungspunkt von 53°C der Firma Huntsman. |
| Dyhard 100S | Latenter Härter der Firma AlzChem für Epoxidsysteme bestehend aus mikronisiertem Dicyandiamid bei dem 98 % der Partikel kleiner 10 um sind. |
| Dyhard UR500 | Difunktioneller, latenter Uronbeschleuniger für Epoxidsysteme bei dem 98 % der Partikel kleiner 10 µm sind. |

### Herstellung von erfindungsgemäßen Haftklebebändern

Die Herstellung der jeweiligen thermisch härtbaren Haftklebemassen erfolgte im Labor durch Lösen des mindestens einen Polymers in Butanon bei 23°C. Anschließend wurde das/wurden die Reaktivharz(e) zugegeben. Im Anschluss wurde der Härter unter starker Scherung mittels Rühren zugegeben. Die einzelnen Komponenten der Klebmassen sind in der nachfolgenden Tabelle 1 aufgeführt.

**Tabelle 1: Zusammensetzung der Haftklebemassen.**

| **Beispiel:** | **K1** | **K2** | **K3** | **K4*** | **K5** | **K6** | **V1** |
|---|---|---|---|---|---|---|---|
| | Gew. teile | Gew. teile | Gew. teile | Gew. teile | Gew. teile | Gew. teile | Gew. teile |
| Breon N41H80 | | | - | | 25 | 25 | |
| Desmomelt 530 | 20 | 30 | 40 | 50 | | | 60 |
| Epon Resin 828 | - | - | - | | 75 | | |
| PolyDis PD3611 | - | - | - | | | 60 | |
| PolyDis PD3691 | - | - | - | | | 15 | |
| Tactix 556 | 80 | 70 | 60 | 50 | - | | 40 |
| Dyhard 100S | 4,62 | 4,04 | 3,47 | 2,89 | 5,13 | 2,37 | 2,31 |
| Dyhard UR500 | 0,4 | 0,35 | 0,3 | 0,25 | 0,38 | 0,38 | 0,2 |

| | | | | | | | |
|---|---|---|---|---|---|---|---|
| *Hotmelt-Haftklebemasse. | | | | | | | |

Die Klebmassen wurden auf eine silikonisierte PET Folie aus Lösungen in Butanon (Feststoffgehalt: 40 Gew.-% bis 50 Gew.-%) ausgestrichen, das Lösungsmittel bei 105°C entfernt und die offene Seite mit einem zweiten silikonisierten Liner eingedeckt. Die Schichtdicken betrugen 50pm ± 3pm und 100pm ± 5pm. Die erfindungsgemäßen Klebebänder wurden durch Lamination dieser Haftklebefilme auf beide Seiten entsprechender Schäume hergestellt. Solche Aufbauten sind in folgender Tabelle 2 detailliert beschrieben:

**Tabelle 2: Aufbau der Haftklebebänder.**

| **Aufbau** | **A1** | **A2** | **A3** | **A4** | **A5** | **A6** | **A7** | **A8** | **VA1** | **VA2** |
|---|---|---|---|---|---|---|---|---|---|---|
| Inducon VP3036 S 400 offenzellig d=400µm | 1x | 1x | 1x | 1x | 1x | 1x | 1x | 1x | 1x | |
| Inducon VP2311 T 400 geschlossen-zellig d=400um | | | | | | | | | | 1x |

| Klebmasse | **K1** | **K2** | **K3** | **K4** | K5 | K5 | K5 | K6 | V1 | K6 |
|---|---|---|---|---|---|---|---|---|---|---|
| Schichtdicke Seite 1 / µm | 200 | 200 | 200 | 200 | **100** | **150** | **200** | 150 | 200 | 150 |
| Schichtdicke Seite 2 / µm | 200 | 200 | 200 | 200 | **100** | **150** | **200** | 150 | 200 | 150 |

**Tabelle 3: Messergebnisse.**

| **Aufbau** | **A1** | **A2** | **A3** | **A4** | **A5** | **A6** | **A7** | **A8** | **VA1** | **VA2** |
|---|---|---|---|---|---|---|---|---|---|---|
| Klebkraft Stahl / N cm⁻¹ | 12,3 | 10,9 | 6, 7 | 0, 6 | 11,2 | 10,6 | 10,2 | 8,2 | 0 | 8, 9 |
| Verklebungsfestigkeit / MPa | 12,4 | 9,5 | 6,8 | 3,7 | 4,6 | 7, 3 | 10,9 | 9, 1 | 0,83 | 0,76 |
| Art des Bruches | k-d | k-d | k-d | k-d | k-d | k-d | k-d | k-d | k-e | k-e |

| | | | | | | | | | | |
|---|---|---|---|---|---|---|---|---|---|---|
| * k-d: kohäsiv-duroplastisch, k-e: kohäsiver Schaumbruch (elastischer Schaum) | | | | | | | | | | |

Wie in Tabelle 3 gezeigt, folgt aus einem Vergleich des Vergleichsaufbaus VA1 mit den erfindungsgemäßen Aufbauten A1-A4, dass sowohl die Klebkraft der unausgehärteten Aufbauten mit sinkendem Reaktivharzanteil als auch die Scherfestigkeiten im ausgehärteten Zustand sinken. Damit VA1 trotz der nicht vorhandenen Klebkraft gemessen werden konnte, wurden die beiden Stahlsubstrate zur Verklebung auf 50°C erhitzt. Ist der Reaktivharzanteil zu niedrig (< 50 Gew.-%) oder der Matrixpolymergehalt zu hoch, so nimmt die Fähigkeit der Klebemassen, in die offenen Poren zu fließen, stark ab, sodass bei VA1 bereits ein klarer Schaumbruch zu erkennen ist. Dies ist leicht zu erkennen, da das kohäsive Bruchbild einen elastischen Schaum aufzeigt. Im Gegensatz dazu zeigen erfindungsgemäße Aufbauten A1-A4 kohäsive Bruchbilder, die sehr hart duroplastisch sind.

Die offenzelligen Schäume der Aufbauten A5-A7 wurden mit unterschiedlich dicken Klebefilmen ausgerüstet. Die Scherfestigkeiten steigen mit der Schichtdicke der auf das Schaumsubstrat auflaminierten Klebefilme an. Je mehr Klebemasse vorhanden ist, desto besser und vollständiger werden die Poren des Schaumes im Aushärteschritt benetzt und mit Klebmasse gefüllt.

Der Vergleich von A8 und VA2 zeigt, dass eine offenporige Schaumstruktur elementar wichtig ist, um Verklebungsfestigkeiten größer 2 MPa zu erhalten. Nur so kommt es mit dem einfließenden härtenden Klebstoff zu einer Verstärkung des Schaumes.

## Patentansprüche

1. Flexibles haftklebriges flächiges Gebilde zur strukturellen Verklebung, insbesondere zum Spaltmaßausgleich, umfassend (a) ein offenzelliges flexibles Schaumsubstrat mit (b) mindestens einer Schicht einer thermisch härtbaren Haftklebemasse auf beiden Seiten des offenzelligen flexiblen Schaumsubstrats,
wobei das offenzellige Schaumsubstrat (a) ein chemisch vernetzter Schaum ist,
wobei die thermisch härtbare Haftklebemasse mindestens (i) ein Polymer, mindestens (ii) eine Reaktivkomponente, mindestens (iii) einen Aktivator und gegebenenfalls (iv) ein Klebharz umfasst,
wobei die thermisch härtbare Haftklebemasse auf 100 Teile Polymer (i) und gegebenenfalls Klebharz (iv) mindestens 100 Teile Reaktivkomponente (ii) enthält.

2. Flexibles haftklebriges flächiges Gebilde nach Anspruch 1, wobei das offenzellige Schaumsubstrat (a) ein elastischer Polyurethan-Schaum ist.

3. Flexibles haftklebriges flächiges Gebilde nach Anspruch 1 oder 2, wobei das genannte Polymer (i) aus einem Elastomer auf der Basis von Acrylaten und/oder Methacrylaten, Polyurethanen, Naturkautschuken, Synthesekautschuken, wie Butyl-, (Iso)Butyl-, Nitril- oder Butadienkautschuken; Styrolblockcopolymeren mit einem Elastomerblock aus ungesättigten oder teilweise oder vollständig hydrierten Polydienblöcken, Polyolefinen, Fluorpolymeren und/oder Silikonen; oder einem Thermoplasten, wie Poly(ethylen), Poly(propylen), Poly(vinylchlorid), Poly(acrylat), Poly(methacrylat), Poly(styrol), Poly(oxymethylen), Poly(ethylenoxid), Poly(ethylenterephthalat), Poly(carbonat), oder Poly(phenylenoxid), ausgewählt ist.

4. Flexibles haftklebriges flächiges Gebilde nach einem der vorhergehenden Ansprüche, wobei die Reaktivkomponente (ii) ein Reaktivharz, umfassend (Meth)Acrylsäureester mit 4 bis 18 C-Atomen; oder ein Epoxidharz und/oder einer Mischung verschiedener Epoxidharze, insbesondere ein epoxidierter Nitrilkautschuk, ein Epoxidharz auf Basis von Bisphenol-A, Bisphenol-F oder Bisphenol-S, ein Epoxyphenolnovolak, ein Epoxycresolnovolak, oder ein Dicyclopentadien-Epoxynovolak ist.

5. Flexibles haftklebriges flächiges Gebilde nach einem der vorhergehenden Ansprüche, wobei der Aktivator (iii) aus der Gruppe, bestehend aus einem aliphatischen Amin, aromatischen Amin, modifizierten Amin, Polyamidharz, Säureanhydrid, sekundären Amin, Mercaptan oder Dicyandiamid, ausgewählt ist.

6. Flexibles haftklebriges flächiges Gebilde nach einem der vorhergehenden Ansprüche, wobei die thermisch härtbare Haftklebemasse (b) ferner induktiv erhitzbare Metalle in fein verteilter Form (iv) umfasst.

7. Flexibles haftklebriges flächiges Gebilde nach einem der vorhergehenden Ansprüche, umfassend weitere Filme, Schichten, Klebstoffe, Träger, Trennpapier und/oder Trennliner.

8. Verwendung des flexiblen haftklebrigen flächigen Gebildes nach einem der Ansprüche 1 bis 7 zur Verklebung von Materialien aus Metall, Holz, Glas und/oder Kunststoff, insbesondere in strukturellen Verklebungen zum Spaltmaßausgleich.

9. Verwendung nach Anspruch 8 zur Verklebung von geölten Materialien aus Metall, Holz, Glas und/oder Kunststoff.

10. Verfahren zur Herstellung eines flexiblen haftklebrigen flächigen Gebildes, wobei das Verfahren die folgenden Schritte umfasst:
A. Bereitstellen einer homogenen Haftklebemasse durch
(I) Auflösen und/oder Feinverteilen der Inhaltsstoffe, gegebenenfalls in einem oder mehreren Lösemittel(n), gegebenenfalls unter Einwirkung von Wärme und/oder Scherung, zu einer homogenen, thermisch härtbaren Haftklebemasse, oder
(II) Aufschmelzen einer homogenen, thermisch härtbaren Hotmelt-Haftklebemasse, die die Inhaltsstoffe umfasst, unter Einwirkung von Wärme;
B. Beschichten eines Trennliners mit der homogenen, thermisch härtbaren Haftklebemasse aus Schritt A1.(I) oder A1.(II);
C. (I) Verdunsten des Lösemittels, falls vorhanden, und/oder (II) Gegebenenfalls Abkühlen des mit der Klebemasse beschichteten Trennliners aus Schritt B;
D. Laminieren eines flexiblen, offenzelligen Schaumsubstrats mit mindestens zwei aus Schritt C erhaltenen Haftklebefilmen, gegebenenfalls abgedeckt mit dem Trennliner auf der dem Schaum abgewandten Seite, auf jeweils einer Seite des Schaumsubstrats, um so ein flexibles haftklebriges flächiges Gebilde zu erhalten; und
E. Gegebenenfalls Aufwickeln des flexiblen haftklebrigen flächigen Gebildes nach Schritt D zu einer Rolle;
wobei die Inhaltsstoffe mindestens ein (i) Polymer, mindestens eine (ii) Reaktivkomponente, mindestens einen (iii) Aktivator und gegebenenfalls ein (iv) Klebharz sowie gegebenenfalls weitere Additive und/oder Hilfsstoffe umfassen, wobei die thermisch härtbare Haftklebemasse auf 100 Teile Polymer (i) und gegebenenfalls Klebharz (iv) mindestens 100 Teile Reaktivkomponente (ii) enthält.

11. Verfahren nach Anspruch 10, wobei die Schichtdicke der thermisch härtbaren Haftklebemasse nach Schritt C im Bereich von etwa 50 bis 500 µm, bevorzugt etwa 75 bis 300 µm, besonders bevorzugt im Bereich von etwa 100 bis 250 µm, liegt.

## Claims

1. Flexible, pressure-sensitively adhesive sheetlike structure for structural bonding, more particularly for clearance compensation, comprising (a) an open-cell flexible foam substrate with (b) at least one layer of a thermally curable pressure sensitive adhesive on both sides of the open-cell flexible foam substrate,
wherein the open-cell foam substrate (a) is a chemically crosslinked foam,
wherein the thermally curable pressure sensitive adhesive comprises at least (i) a polymer, at least (ii) a reactive component, at least (iii) an activator, and optionally (iv) a tackifier resin,
wherein the thermally curable pressure sensitive adhesive comprises at least 100 parts of reactive component (ii) per 100 parts of polymer (i) and, where used, tackifier resin (iv).

2. Flexible, pressure-sensitively adhesive sheetlike structure according to Claim 1, wherein the open-cell foam substrate (a) is an elastic polyurethane foam.

3. Flexible, pressure-sensitively adhesive sheetlike structure according to Claim 1 or 2, wherein said polymer (i) is selected from an elastomer based on acrylates and/or methacrylates, polyurethanes, natural rubbers, synthetic rubbers, such as butyl, (iso)butyl, nitrile or butadiene rubbers; styrene block copolymers having an elastomer block composed of unsaturated or partially or fully hydrogenated polydiene blocks, polyolefins, fluoropolymers and/or silicones; or a thermoplastic, such as poly(ethylene), poly(propylene), poly(vinyl chloride), poly(acrylate), poly(methacrylate), poly(styrene), poly(oxymethylene), poly(ethylene oxide), poly(ethylene terephthalate), poly(carbonate), or poly(phenylene oxide).

4. Flexible, pressure-sensitively adhesive sheetlike structure according to any of the preceding claims, wherein the reactive component (ii) is a reactive resin comprising (meth)acrylic esters having 4 to 18 carbon atoms; or an epoxy resin and/or a mixture of different epoxy resins, more particularly an epoxidized nitrile rubber, an epoxy resin based on bisphenol A, bisphenol F or bisphenol S, an epoxy phenol novolac, an epoxy cresol novolac, or a dicyclopentadiene epoxy novolac.

5. Flexible, pressure-sensitively adhesive sheetlike structure according to any of the preceding claims, wherein the activator (iii) is selected from the group consisting of an aliphatic amine, aromatic amine, modified amine, polyamide resin, acid anhydride, secondary amine, mercaptan or dicyandiamide.

6. Flexible, pressure-sensitively adhesive sheetlike structure according to any of the preceding claims, wherein the thermally curable pressure sensitive adhesive (b) further comprises inductively heatable metals in finely divided form (iv).

7. Flexible, pressure-sensitively adhesive sheetlike structure according to any of the preceding claims, comprising further films, layers, adhesives, carrier, release paper and/or release liner.

8. Use of the flexible, pressure-sensitively adhesive sheetlike structure according to any of Claims 1 to 7 for adhesively bonding materials made of metal, wood, glass and/or plastic, especially in structural bonds for clearance compensation.

9. Use according to Claim 8 for adhesively bonding oiled materials made of metal, wood, glass and/or plastic.

10. Method for producing a flexible, pressure-sensitively adhesive sheetlike structure, wherein the method comprises the following steps:
A. providing a homogeneous pressure sensitive adhesive by
(I) dissolving and/or finely dividing the ingredients, optionally in one or more solvents, optionally with exposure to heat and/or shearing, to give a homogeneous, thermally curable pressure sensitive adhesive, or
(II) melting a homogeneous, thermally curable pressure sensitive hotmelt adhesive which comprises the ingredients, with exposure to heat;
B. coating a release liner with the homogeneous, thermally curable pressure sensitive adhesive from step A1.(I) or A1.(II);
C.
(I) evaporating the solvent, if present, and/or
(II) optionally cooling the release liner coated with the adhesive, from step B;
D. laminating a flexible, open-cell foam substrate with at least two pressure-sensitively adhesive films obtained from step C, optionally lined with the release liner on the side facing away from the foam, onto each side of the foam substrate, so as to give a flexible, pressure-sensitively adhesive sheetlike structure; and
E. optionally winding up the flexible, pressure-sensitively adhesive sheetlike structure after step D, to form a roll;
wherein the ingredients comprise at least one (i) polymer, at least one (ii) reactive component, at least one (iii) activator, and optionally a (iv) tackifier resin and also, optionally, further additives and/or auxiliaries, wherein the thermally curable pressure sensitive adhesive comprises at least 100 parts of reactive component (ii) per 100 parts of polymer (i) and, where used, tackifier resin (iv).

11. Method according to Claim 10, wherein the layer thickness of the thermally curable pressure sensitive adhesive after step C is in the range from about 50 to 500 µm, preferably about 75 to 300 µm, more preferably in the range from about 100 to 250 µm.

## Revendications

1. Structure plane autoadhésive flexible pour un collage structurel, en particulier pour la compensation de jeu, comprenant
(a) un substrat de mousse flexible à alvéoles ouvertes comportant (b) au moins une couche d'une masse autoadhésive durcissable thermiquement sur les deux côtés du substrat de mousse flexible à alvéoles ouvertes,
le substrat de mousse à alvéoles ouvertes (a) étant une mousse réticulée chimiquement,
la masse autoadhésive durcissable thermiquement comprenant au moins (i) un polymère, au moins (ii) un composant réactif, au moins (iii) un activateur et éventuellement (iv) une résine adhésive,
la masse autoadhésive durcissable thermiquement contenant, pour 100 parties de polymère (i) et éventuellement de résine adhésive (iv), au moins 100 parties de composant réactif (ii).

2. Structure plane autoadhésive flexible selon la revendication 1, le substrat de mousse à alvéoles ouvertes (a) étant une mousse de polyuréthane élastique.

3. Structure plane autoadhésive flexible selon la revendication 1 ou 2, le polymère (i) mentionné étant choisi parmi un élastomère à base d'acrylates et/ou de méthacrylates, de polyuréthanes, de caoutchoucs naturels, de caoutchoucs de synthèse, comme des caoutchoucs de butyle, d' (iso)butyle, de nitrile ou de butadiène ; des copolymères à bloc de styrène comportant un bloc élastomérique composé de blocs de polydiène insaturés ou partiellement ou totalement hydrogénés, des polyoléfines, des polymères fluorés et/ou des silicones ; ou parmi un thermoplaste, comme un polyéthylène, un polypropylène, un poly(chlorure de vinyle), un polyacrylate, un polyméthacrylate, un polystyrène, un polyoxyméthylène, un poly(oxyde d'éthylène), un poly(téréphtalate d'éthylène), un polycarbonate, ou un poly(oxyde de phénylène).

4. Structure plane autoadhésive flexible selon l'une quelconque des revendications précédentes, le composant réactif (ii) étant une résine réactive, comprenant des esters d'acide (méth)acrylique comportant 4 à 18 atomes de C ; ou une résine époxy et/ou un mélange de différentes résines époxys, en particulier un caoutchouc de nitrile époxydé, une résine époxy à base de bisphénol A, de bisphénol F ou de bisphénol S, une époxyphénolnovolaque, une époxycrésolnovolaque, ou une dicyclopentadiène-époxynovolaque.

5. Structure plane autoadhésive flexible selon l'une quelconque des revendications précédentes, l'activateur (iii) étant choisi dans le groupe constitué par une amine aliphatique, une amine aromatique, une amine modifiée, une résine de polyamide, un anhydride d'acide, une amine secondaire, un mercaptan ou le dicyandiamide.

6. Structure plane autoadhésive flexible selon l'une quelconque des revendications précédentes, la masse autoadhésive durcissable thermiquement (b) comprenant en outre des métaux pouvant être chauffés de manière inductive sous forme finement divisée (iv).

7. Structure plane autoadhésive flexible selon l'une quelconque des revendications précédentes, comprenant d'autres films, couches, adhésifs, supports, papier de séparation et/ou pellicules antiadhésives.

8. Utilisation de la structure plane autoadhésive flexible selon l'une quelconque des revendications 1 à 7 pour le collage de matériaux de métal, de bois, de verre et/ou de matière plastique, en particulier dans des collages structurels de compensation de jeu.

9. Utilisation selon la revendication 8 pour le collage de matériaux huilés composés de métal, de bois, de verre et/ou de matière plastique.

10. Procédé de préparation d'une structure plane autoadhésive flexible, le procédé comprenant les étapes suivantes :
A. fourniture d'une masse autoadhésive homogène par
(I) dissolution et/ou division finement des ingrédients, éventuellement dans un ou plusieurs solvants, éventuellement sous l'action de chaleur et/ou de cisaillement, pour donner une masse autoadhésive durcissable thermiquement, homogène, ou
(II) fusion d'une masse autoadhésive thermofusible durcissable thermiquement, homogène, qui comprend les ingrédients, sous l'action de chaleur ;
B. revêtement d'une pellicule antiadhésive par la masse autoadhésive durcissable thermiquement, homogène de l'étape A1.(I) ou A1.(II) ;
C. (I) évaporation du solvant, s'il est présent, et/ou (II) éventuellement refroidissement de la pellicule antiadhésive revêtue par la masse adhésive de l'étape B ;
D. stratification d'un substrat de mousse à alvéoles ouvertes, flexible avec au moins deux films autoadhésifs obtenus de l'étape C, éventuellement recouverts par la pellicule antiadhésive sur le côté opposé à la mousse, sur à chaque fois un côté du substrat de mousse, afin d'obtenir ainsi une structure plane autoadhésive flexible ; et
E. éventuellement, enroulement de la structure plane autoadhésive flexible selon l'étape D pour donner un rouleau ;
les ingrédients comprenant au moins un (i) polymère, au moins un (ii) composant réactif, au moins un (iii) activateur et éventuellement une (iv) résine adhésive ainsi qu'éventuellement d'autres additifs et/ou auxiliaires, la masse autoadhésive durcissable thermiquement contenant, pour 100 parties de polymère (i) et éventuellement de résine adhésive (iv), au moins 100 parties de composant réactif (ii).

11. Procédé selon la revendication 10, l'épaisseur de couche de la masse autoadhésive durcissable thermiquement après l'étape C se situant dans la plage d'environ 50 à 500 um, préférablement d'environ 75 à 300 um, particulièrement préférablement dans la plage d'environ 100 à 250 um.
